# EUROPÄISCHE PATENTSCHRIFT

(11) **EP 1 290 314 B1**
(45) Veröffentlichungstag und Bekanntmachung des Hinweises auf die Patenterteilung: **07.09.2005**
(21) Anmeldenummer: 01947364.4
(22) Anmeldetag: 13.06.2001
(51) Int. Cl.: F01D 17/16

(54) **ABGASTURBOLADER FÜR EINE BRENNKRAFTMASCHINE**
EXHAUST GAS TURBOCHARGER FOR AN INTERNAL COMBUSTION ENGINE
TURBOCOMPRESSEUR POUR MOTEUR A COMBUSTION INTERNE

(30) Priorität: 15.06.2000 DE 10029640
(43) Veröffentlichungstag der Anmeldung: 12.03.2003
(73) Patentinhaber: DaimlerChrysler AG, 70567 Stuttgart (DE); 3K-Warner Turbosystems GmbH, 67292 Kirchheimbolanden (DE)
(72) Erfinder: FINGER, Helmut, 70771 Leinfelden-Echterdingen (DE); FLEDERSBACHER, Peter, 70619 Stuttgart (DE); HEMER, Hans-Josef, 67550 Worms (DE); KOCH, Ralf, 67308 Rüssingen (DE); LÖFFLER, Paul, 70199 Stuttgart (DE); SUMSER, Siegfried, 70184 Stuttgart (DE)
(86) Internationale Anmeldenummer: PCT/EP2001/006681
(87) Internationale Veröffentlichungsnummer: WO 2001/096713

(56) Entgegenhaltungen:
- US-A- 4 642 026
- US-A- 5 454 225
- US-A- 6 050 775

## Beschreibung

Die Erfindung bezieht sich auf einen Abgasturbolader für eine Brennkraftmaschine nach dem Oberbegriff. des. Anspruches 1.

Aus der Druckschrift DE 196 15 237 C2 ist ein derartiger Abgasturbolader mit einer Turbine mit radialem und mit halbaxialen Strömungseintrittsquerschnitt im Zuströmbereich der Turbine bekannt. Die Strömungseintrittsquerschnitte, zwischen denen ein strömungsgünstig konturierter Strömungsring im Einströmbereich der Turbine angeordnet ist, ermöglichen sowohl eine radiale als auch eine halbaxiale Anströmung des Turbinenrades. Im radialen Strömungseintrittsquerschnitt ist ein Leitgitter mit verstellbaren Leitschaufeln angeordnet, über die der Strömungseintrittsquerschnitt variiert werden kann. Über die Einstellung des Leitgitters kann der Abgasgegendruck und auch die Art und Weise der Zuströmung des Abgases auf das Turbinenrad beeinflusst werden, wodurch die Leistung der Turbine und-die Leistung des Verdichters je nach Bedarf und Betriebszustand der Brennkraftmaschine eingestellt werden können.

Vgl. auch das Dokument US-A-4 454 225. Derartige, mit variabler Turbinengeometrie ausgestattete Abgasturbolader werden insbesondere auch im Bremsbetrieb der Brennkraftmaschine eingesetzt. Im Bremsbetrieb wird das Leitgitter in eine Staustellung überführt, in welcher der Eintrittsquerschnitt deutlich reduziert ist, woraufhin sich im Leitungsabschnitt stromauf der Turbine ein erhöhter Abgasgegendruck aufbaut, welcher bewirkt, dass das Abgas mit hoher Geschwindigkeit durch die Kanäle zwischen den Leitschaufeln strömt und das Turbinenrad mit einem hohen Impuls beaufschlagt. Durch die erhöhte Laderleistung wird auch die dem Motor zugeführte Verbrennungsluft unter einen erhöhten Ladedruck gesetzt. Der Zylinder wird eingangsseitig mit erhöhtem Ladedruck beaufschlagt, zugleich liegt an der Ausgangsseite ein erhöhter Abgasgegendruck an, der dem Abblasen der im Zylinder verdichteten Luft über Bremsventile in den Abgasstrang hinein entgegenwirkt. Im Motorbremsbetrieb muss der Kolben im Verdichtungs- und Ausschiebehub Kompressionsarbeit gegen den hohen Überdruck im Abgasstrang verrichten, hierdurch wird eine starke Bremswirkung erreicht.

Die gewünschten hohen Bremsleistungen können jedoch nur erzielt werden, wenn innerhalb der Turbine eine gewünschte Druckverteilung herrscht und das Abgas in der vorgesehenen Weise die Turbine durchströmt. Problematisch hierbei sind insbesondere Fehlluftströme, welche durch Bauteil- und Fertigungstoleranzen, aber auch durch Verschleiß und wärmebedingte Dehnungen auftreten können und einen Solldruckverlauf innerhalb der Turbine stark beeinträchtigen können, was sich negativ auf die Motorbremsleistung, aber auch auf die Motorleistung in der befeuerten Antriebsbetriebsweise auswirkt. Fehlluftströme können aber auch durch konstruktiv bedingte Spalte entstehen, welche für die Bewegung der Leitschaufeln des Leitgitters der variablen Turbinengeometrie in einem der Strömungseintrittsquerschnitte erforderlich sind.

Der Erfindung liegt das Problem zu Grunde, den Wirkungsgrad von Abgasturbinen mit variabler Turbinengeometrie zu steigern. Insbesondere im Motorbremsbetrieb, gegebenenfalls aber auch in der befeuerten Antriebsbetriebsweise, soll die Laderleistung verbessert werden.

Dieses Problem wird erfindungsgemäß mit den Merkmalen des Anspruches 1 gelöst.

Gemäß dem neuartigen Abgasturbolader ist vorgesehen, dass die Position des Strömungsrings im Gehäuse des Laders veränderlich einzustellen ist. Dieser Strömungsring ist im Stand der Technik stets als ein fest mit dem Ladergehäuse verbundenes Bauteil ausgebildet, wohingegen gemäß neuem Anspruch 1 der Strömungsring beweglich sein soll. Hierdurch wird die Möglichkeit eröffnet, Spaltmaße, welche konstruktiv bedingt sind oder durch Verschleiß, durch Wärmedehnungen oder durch sonstige Ursachen entstehen, über eine Bewegung des Strömungsrings zu reduzieren und gegebenenfalls völlig zu eliminieren. Fehlluftströme können weitgehend oder vollständig ausgeschlossen werden, innerhalb der Turbine kann eine gewünschte Druckverteilung eingestellt werden, die eine gewünschte Abgasströmung auf das Turbinenrad bewirkt. Es ist beispielsweise möglich, bei Halbaxial-Radial-Kombinationsturbinen ein im halbaxialen Strömungseintrittsquerschnitt angeordnetes Leitgitter mit feststehenden Schaufeln auszubilden und dieses Halbaxial-Leitgitter speziell auf die Anforderungen im Motorbremsbetrieb auszulegen. In dieser Ausführung wird angestrebt, im Motorbremsbetrieb den radialen Strömungseintrittsquerschnitt soweit wie möglich zu reduzieren, das heißt das Radialleitgitter zu schließen. Um aber die Radialleitschaufeln verstellen zu können, ist ein Minimumspalt an den axialen Stirnseiten der Radialleitschaufeln erforderlich; zur Verstellung der Radialleitschaufeln kann der verstellbare Strömungsring axial in eine vom Radialleitgitter weiter entferntere Position verschoben werden. Anschließend wird zur Schließung von Luftspalten der Strömungsring bis auf Kontakt zur Stirnseite der Radialleitschaufeln bzw. eines sonstigen Bauteils des Radialleitgitters herangeschoben.

Der Strömungsring ist vorteilhaft axial verschiebbar ausgebildet, wodurch insbesondere Leitschaufelspalte am Radialleitgitter reduziert werden können. Alternativ oder zusätzlich kann es aber auch zweckmäßig sein, eine radiale Verstellbarkeit des Strömungsringes vorzusehen, die beispielsweise durch eine exzentrische Verschiebung des Strömungsringes und/oder durch eine radiale Erweiterung oder Verjüngung des Strömungsringes erzielt werden kann.

Im Falle eines axial verschieblichen strömungsringes wird die Verschiebebewegung vorteilhaft durch Anschläge begrenzt, welche insbesondere die Öffnung eines Leitschaufelspalts des Radialleitgitters auf ein vorgegebenes Maß begrenzen. Dieser zugelassene axiale Weg, welcher mit dem axialen Spiel des Strömungsringes identisch ist, beträgt vorteilhaft etwa 0,15 mm bis 0, 3 mm. Dieses vergleichsweise geringe Maß soll sicher stellen, dass in einem Störungsfall, beispielsweise bei einem Ausfall eines den Strömungsring verstellenden Stellelements, das maximale Spiel des Strömungsrings auf ein Maß begrenzt wird, welches ein Funktionieren des Abgasturboladers sowohl im Motorbremsbetrieb als auch in der befeuerten Antriebsbetriebsweise sicher stellt.

Im Falle eines radialen Leitgitters mit verstellbaren Leitschaufeln sind diese über jeweils eine axiale Welle zweckmäßig am Ladergehäuse, vorteilhaft aber auch im verschieblichen Strömungsring gelagert. Im Falle einer auch im Strömungsring vorgesehenen, doppelseitigen Lagerung der Leitschaufeln sind im Strömungsring zweckmäßig Ausnehmungen für die Aufnahme der zugeordneten Schaufelwelle vorgesehen, wobei die Tiefe der Ausnehmungen vorteilhaft an die axiale Länge der Schaufelwellen angepasst ist, um die Schaufelwellen auch bei einer völligen Schließung des Leitschaufelspaltes aufnehmen zu können.

Es kann gegebenenfalls auch zweckmäßig sein, in bestimmten Betriebszuständen der Brennkraftmaschine im Motorbremsbetrieb und/oder in der befeuerten Antriebsbetriebsweise ein erwünschtes Spaltmaß vorzusehen, mit dem die Strömungs- und Druckverhältnisse innerhalb des Ladergehäuses in der Turbine in einer bestimmten Weise gezielt beeinflusst werden. Außerdem kann es zweckmäßig sein, zusätzliche Kriterien für die Verstellung des Strömungsrings vorzusehen, beispielsweise derart, dass der Strömungseintrittquerschnitt für die radiale und/oder die halbaxiale Zuströmung ein Maximum nicht überschreiten darf.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine Turbine eines Abgasturboladers mit variabler Turbinengeometrie und axial verstellbarem Strömungsring,
- Fig. 2: eine Fig. 1 entsprechende Darstellung, jedoch mit einer Modifikation im Bereich des radialen Leitgitters,
- Fig. 3: eine Fig. 1 bzw. Fig. 2 entsprechende Darstellung, jedoch mit einer weiteren Modifikation im Bereich des radialen Leitgitters.

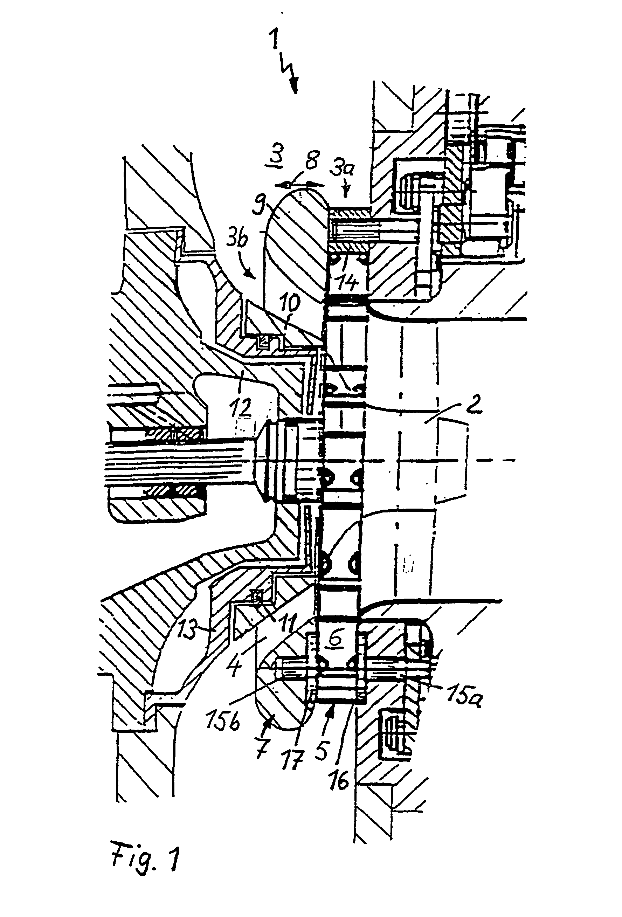

Bei den in den Figuren 1 bis 3 dargestellten Ausführungsbeispielen sind gleiche Bauteile mit gleichen Bezugszeichen versehen.

Die in Fig. 1 dargestellte Turbine 1 eines Abgasturboladers für eine Brennkraftmaschine, beispielsweise eine DieselBrennkraftmaschine oder ein Ottomotor für ein Nutzfahrzeug oder einen PKW, umfasst ein Turbinenrad 2, welches von unter Überdruck stehenden Abgasen der Brennkraftmaschine angetrieben wird und über eine Verbindungswelle einen nicht dargestellten Verdichter des Abgasturboladers antreibt, der Verbrennungsluft ansaugt und auf einen erhöhten Ladedruck verdichtet, welcher dem Zylindereinlass der Brennkraftmaschine zugeführt wird. Weiterhin umfasst die Turbine 1 einen Strömungskanal 3, der das Turbinenrad 2 radial und halbaxial einschließt und einen radialen Strömungseintrittsquerschnitt 3a sowie einen halbaxialen Strömungseintrittsquerschnitt 3b zum Turbinenrad 2 aufweist. Im radialen Strömungseintrittsquerschnitt 3a befindet sich ein Radialleitgitter 5 mit verstellbaren Leitschaufeln 6; dieses Radialleitgitter 5 bildet eine variable Turbinengeometrie. Im halbaxialen Strömungseintrittsquerschnitt 3b ist ein Halbaxial-Leitgitter 4 mit feststehenden Leitschaufeln angeordnet.

Je nach Betriebsweise der Brennkraftmaschine kann die variable Turbinengeometrie durch ein zugeordnetes Stellelement in Ihrer Position verstellt werden, wodurch der entsprechende Strömungseintrittsquerschnitt verändert wird. Im Ausführungsbeispiel ist vorgesehen, in der befeuerten Antriebsbetriebsweise die Leitschaufeln 6 des Radialleitgitters 5 in eine Öffnungsstellung zu versetzen, um einen größtmöglichen Massendurchsatz durch die Turbine 1 zu ermöglichen und eine hohe Laderleistung zu erzeugen. Zur Erzeugung von Motorbremsleistung wird dagegen das Radialleitgitter 5 durch eine entsprechende Verstellung der Leitschaufeln 6 in eine Staustellung mit reduziertem Querschnitt, insbesondere mit einem auf Null reduzierten radialen Strömungseintrittsquerschnitt 3a verstellt. Das über den Strömungskanal 3 vom Abgasauslass der Brennkraftmaschine zugeführte Abgas ist nunmehr gezwungen, größtenteils bzw. vollständig über den halbaxialen Strömungseintrittsquerschnitt 3b und dem dort angeordneten Halbaxial-Leitgitter 4 auf das Turbinenrad 2 einzuströmen. Auf Grund des gegenüber der befeuerten Betriebsweise reduzierten Strömungsgesamtquerschnitts baut sich im Abgasstrang stromauf der Turbine ein erhöhter Abgasgegendruck auf, gleichzeitig wird im Ansaugtrakt ein. Überdruck erzeugt. Im Motorbremsbetrieb werden Bremsventile am Zylinderauslaß der Brennkraftmaschine geöffnet, die in den Zylindern verdichtete Luft muss gegen den erhöhten Abgasgegendruck in den Abgasstrang ausgeschoben werden.

Im Strömungskanal 3 der Turbine 1 ist ein Strömungsring 7 angeordnet, der sowohl den radialen Strömungseintrittsquerschnitt 3a als auch den halbaxialen Strömungseintrittsquerschnitt 3b begrenzt: Der Strömungsring 7 ist axial im Abgasturbolader verschiebbar; die axiale Verschiebbarkeit wird mit dem Doppelpfeil 8 angedeutet. Der Strömungsring 7 umfasst einen Außenring 9 und einen Innenring 10, zwischen denen das Halbaxial-Leitgitter 4 fest angeordnet ist. Auf der radial innen liegenden Seite des Innenrings 10 wird dieser von einem gehäusefesten Dichtring 11 beaufschlagt, welcher in einer Nut eines Gehäusebauteils, welches einem Lagergehäuse 12 zugeordnet ist, aufgenommen ist. Zweckmäßig ist der Dichtring 11 an einem Hitzeschild 13 gehalten, welches fest mit dem Lagergehäuse 12 verbunden ist.

Der gehäusefeste Hitzeschild 13 weist auf der dem Strömungsring 7 zugewandten Seite zwei Stufen auf, welche Anschläge für den axial verschieblichen Strömungsring 7 bilden, dessen Innenring 10 eine den Stufen angepasste Kontur aufweist. In Fig. 1 ist der Strömungsring 7 in seiner am Radialleitgitter 5 spaltfrei anliegenden Position dargestellt; eine axiale Verschiebung aus dieser Position wird durch die Anschläge am gehäusefesten Bauteil 13 begrenzt, gegen die der Strömungsring 7 anschlägt. Der Dichtring 11 verhindert Fehlluftströme zwischen dem Strömungsring 7 und dem radial innenliegenden, gehäusefesten Bauteil 13, auf dem der Strömungsring 7 in Anschlagposition radial aufsitzt.

In der in Fig. 1 gezeigten Stellung liegt der Strömungsring 7 axial an der Stirnseite des Radialleitgitters 5 dichtend an, es ist kein Radialspalt gebildet, wodurch radiale Fehlluftströme verhindert werden. Im radialen Strömungseintrittsquerschnitt 3a können zusätzlich zum Radialleitgitter 5 auch Distanzhülsen 14 angeordnet sein, welche die axiale Verschiebung des Strömungsrings 7 in Richtung des Radialleitgitters 5 begrenzen.

Die verstellbaren Leitschaufeln 6 des Radialleitgitters 5 sind an Wellen 15a und 15b drehbar gelagert, wobei die beiden Wellen 15a und 15b sich an axial gegenüberliegenden Seiten der Leitschaufeln erstrecken und die erste Welle 15a gehäusefest, die zweite Welle 15b dagegen im verschieblichen Strömungsring 7 aufgenommen ist. Die zweite Welle 15b ist in einer Ausnehmung im Strömungsring 7 aufgenommen, wobei die Tiefe der Ausnehmung zumindest der Wellenlänge entspricht, damit bei der am Radialleitgitter 5 axial anliegenden Position .des Strömungsrings 7 ein spaltfreies axiales Anliegen gewährleistet ist.

Die verstellbaren Leitschaufeln 6 sind axial beidseitig von Deckscheiben 16 und 17 eingefasst, welche in entsprechend geformte Ausnehmungen im aufnehmenden gehäuseseitigen Bauteil bzw. an der zugewandten Seite im Strömungsring 7 aufgenommen sind.

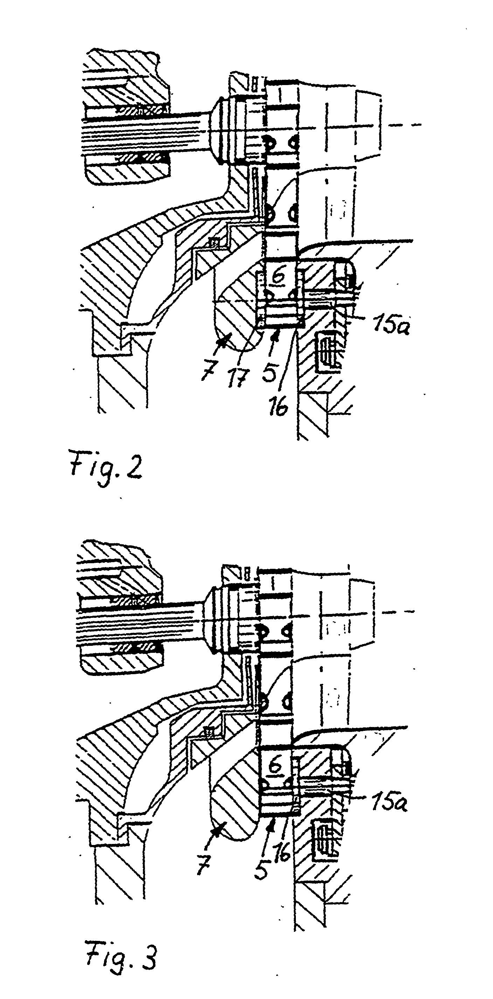

Das in Fig. 2 gezeigte Ausführungsbeispiel entspricht im Wesentlichen demjenigen aus Fig. 1, jedoch mit dem Unterschied, dass die verstellbaren Leitschaufeln 6 des Radialleitgitters 5 nur eine einzige, gehäuseseitige Welle 15a aufweisen. Diese Ausführung bietet den Vorteil, dass auf Ausnehmungen im Strömungsring 7 auf der den Leitschaufeln 6 zugewandten Seite zur Aufnahme eines entsprechenden Wellenstücks verzichtet werden kann. Auch im Ausführungsbeispiel nach Fig. 2 sind zwei Deckscheiben 16 und 17 zu beiden axialen Seiten der Leitschaufeln 6 vorgesehen.

Im Ausführungsbeispiel nach Fig. 3 weist die Leitschaufel 6 des Radialleitgitters 5 lediglich eine gehäuseseitige Welle 15a und auch nur eine gehäuseseitige Deckscheibe 16 auf.

Vorteilhaft sind der Strömungsring 7 und/oder das Halbaxial-Leitgitter 4 und/oder das Radialleitgitter 5 in der Weise aerodynamisch gestaltet bzw. strömungsgünstig konturiert, dass der Strömuflgsring 7 durch die Anströmung über den Strömungskanal 3 bzw. die radiale und/oder die halbaxiale Anströmung durch den radialen bzw. halbaxialen Strömungseintrittsquerschnitt 3a bzw. 3b eine resultierende Druckkraft in Achsrichtung des Turbinenrades erfährt. Die resultierende Druckkraft beaufschlagt den Strömungsring 7 zweckmäßig in Richtung des Radialleitgitters 5 im radialen Strömungseintrittsquerschnitt 3a, so dass der axiale Stirnspalt zwischen der Stirnseite des Radialleitgitters 5 und dem Strömungsring 7 geschlossen wird. Die aerodynamische Gestaltung des Radialleitgitters 5 wird bevorzugt durch die Gestaltung und die Positionen der Leitschaufeln auf dem Radialleitgitter erreicht.

Es kann aber auch zweckmäßig sein, dass der Strömungsring in Richtung eines größer werdenden Stirnspaltes beaufschlagt wird, um Überdrehzahlen zu verhindern.

## Patentansprüche

1. Abgasturbolader für eine Brennkraftmaschine, mit einer Turbine im Abgasstrang und einem von der Turbine angetriebenen Verdichter im Ansaugtrakt der Brennkraftmaschine, wobei die Turbine (1) einen Strömungskanal (3) mit einem radialen Strömungseintrittsquerschnitt (3a) und einem halbaxialen Strömungseintrittsquerschnitt (3b) aufweist und ein die beiden Strömungseintrittsquerschnitte (3a, 3b) begrenzender Strömungsring (7) vorgesehen ist, und wobei die Turbine (1) mit variabler Turbinengeometrie zur veränderlichen Einstellung des Strömungseintrittsquerschnitts (3a, 3b) ausgestattet ist,
**dadurch gekennzeichnet,**
**dass** die Position des Strömungsrings (7) im Gehäuse des Abgasturbolader veränderlich einstellbar ist.

2. Abgasturbolader nach Anspruch 1,
**dadurch gekennzeichnet,**
**dass** der Strömungsring (7) axial verschieblich ausgebildet ist.

3. Abgasturbolader nach Anspruch 2,
**dadurch gekennzeichnet,**
**dass** die durch axiale Verschiebung des Strömungsrings (7) einstellbare Breite des radialen: Strömungseintrittsquerschnitts (3a) auf ein Minimum und/oder ein Maximum begrenzbar ist.

4. Abgasturbolader nach Anspruch 2 oder 3,
**dadurch gekennzeichnet,**
**dass** gehäusefeste Anschläge zur Begrenzung der axialen Verschiebung vorgesehen sind.

5. Abgasturbolader nach einem der Ansprüche 2 bis 4,
**dadurch gekennzeichnet,**
**dass** im radialen Strömungseintrittsquerschnitt (3a) Distanzhülsen (14) vorgesehen sind, welche die axiale Mindestbreite des radialen Strömungseintrittsquerschnitts (3a) festlegen.

6. Abgasturbolader nach einem der Ansprüche 1 bis 5,
**dadurch gekennzeichnet,**
**dass** der halbaxiale Strömungseintrittsquerschnitt (3b) von einem Außenring (9) und einem Innenring (10) des Strömungsrings (7) gebildet ist.

7. Abgasturbolader nach Anspruch 6,
**dadurch gekennzeichnet,**
**dass** auf der radial innen liegenden Seite des Innenrings (10) ein Dichtring (11) zur Abdichtung gegenüber einem gehäusefesten Bauteil vorgesehen ist.

8. Abgasturbolader nach einem der Ansprüche 1 bis 7,
**dadurch gekennzeichnet,**
**dass** im radialen Strömungseintrittsquerschnitt (3a) ein radiales Leitgitter (5) mit verstellbaren Leitschaufeln (6) angeordnet ist, welche an zumindest einer axialen Stirnseite Deckscheiben aufweisen.

9. Abgasturbolader nach einem der Ansprüche 1 bis 8,
**dadurch gekennzeichnet,**
**dass** die Leitschaufeln (6) im radialen Leitgitter (5) über eine axiale Welle (15a) am Ladergehäuse gelagert sind.

10. Abgasturbolader nach einem der Ansprüche 1 bis 9,
**dadurch gekennzeichnet,**
**dass** die Leitschaufeln (6) im radialen Leitgitter (5) über eine axiale Welle (15b) im Strömungsring (7) gelagert sind.

11. Abgasturbolader nach einem der Ansprüche 1 bis 10,
**dadurch gekennzeichnet,**
**dass** im halbaxialen Strömungseintrittsquerschnitt (3a) ein Leitgitter (4) mit feststehenden Schaufeln angeordnet ist.

12. Abgasturbolader nach Anspruch 2,
**dadurch gekennzeichnet,**
**dass** der Strömungsring (7) durch die radiale und/oder die halbaxiale Anströmung eine resultierende Druckkraft in Achsrichtung des Turbinenrades, insbesondere in Richtung eines Radialleitgitters (5) im radialen Strömungseintrittsquerschnitt (3a), erfährt.

## Claims

1. Exhaust gas turbo-charger for an internal combustion engine, with a turbine in the exhaust gas tract and a compressor driven by the turbine in the intake tract of the internal combustion engine, which turbine (1) has a flow passage (3) with a radial flow inlet cross-section (3a) and a semi-axial flow inlet cross-section (3b), and a flow ring (7) bounding the two flow inlet cross-sections (3a, 3b) is provided, the turbine (1) being fitted with a variable turbine geometry for variably setting the flow inlet cross-section (3a, 3b),
**characterised in that**
the position of the flow ring (7) in the housing of the exhaust gas turbo-charger is variably adjustable.

2. Exhaust gas turbo-charger as claimed in claim 1,
**characterised in that**
the flow ring (7) is designed to be axially displaceable.

3. Exhaust gas turbo-charger as claimed in claim 2,
**characterised in that**
the width of the radial flow inlet cross-section (3a) which can be adjusted by displacing the flow ring (7) can be restricted to a minimum and/or a maximum.

4. Exhaust gas turbo-charger as claimed in claim 2 or 3,
**characterised in that**
stops fixedly secured to the housing are provided as a means of restricting the axial displacement.

5. Exhaust gas turbo-charger as claimed in one of claims 2 to 4,
**characterised in that**
spacer bushes (14) are provided in the radial flow inlet cross-section (3a), which fix the axial minimum width of the radial flow inlet cross-section (3a).

6. Exhaust gas turbo-charger as claimed in one of claims 1 to 5,
**characterised in that**
the semi-axial flow inlet cross-section (3b) is formed by an outer ring (9) and an inner ring (10) of the flow ring (7).

7. Exhaust gas turbo-charger as claimed in claim 6,
**characterised in that**
a sealing ring (11) is provided on the side of the inner ring (10) lying radially towards the interior to provide a seal with respect to a component secured to the housing.

8. Exhaust gas turbo-charger as claimed in one of claims 1 to 7,
**characterised in that**
a radial guide baffle (5) is disposed in the radial flow inlet cross-section (3a) and has adjustable guide vanes (6) with cover discs on at least one axial end.

9. Exhaust gas turbo-charger as claimed in one of claims 1 to 8,
**characterised in that**
the guide vanes (6) in the radial guide baffle (5) are mounted by means of an axial shaft (15a) on the charger housing.

10. Exhaust gas turbo-charger as claimed in one of claims 1 to 9,
**characterised in that**
the guide vanes (6) in the radial guide baffle (5) are mounted in the flow ring (7) by means of an axial shaft (15b).

11. Exhaust gas turbo-charger as claimed in one of claims 1 to 10,
**characterised in that**
a guide baffle (4) with stationary vanes is disposed in the semi-axial flow inlet cross-section (3a).

12. Exhaust gas turbo-charger as claimed in claim 2,
a pressure force is imparted to the flow ring (7) in the axial direction of the turbine wheel, in particular in the direction of a radial guide baffle (5) in the radial flow inlet cross-section (3a), as a result of the radial and/or the semi-axial flow.

## Revendications

1. Turbocompresseur pour un moteur à combustion interne, avec une turbine dans le tronçon de gaz d'échappement et avec un compresseur entraîné par la turbine dans l'aile d'aspiration du moteur à combustion interne, la turbine (1) comportant un canal d'écoulement (3) avec une section d'entrée d'écoulement radiale (3a) et avec une section d'entrée d'écoulement semi axiale (3b) et une bague d'écoulement (7) délimitant les deux sections d'entrée d'écoulement(3a, 3b) étant prévue et la turbine (1) présentant une géométrie de turbine variable pour le réglage variable de la section d'entrée d'écoulement (3a, 3b),
**caractérisé en ce que**
la position de la bague d'écoulement (7) dans le boîtier du turbocompresseur est réglable de façon variable.

2. Turbocompresseur selon la revendication 1,
**caractérisé en ce que**
la bague d'écoulement (7) est conçue de façon déplaçable en direction axiale.

3. Turbocompresseur selon la revendication 2,
**caractérisé en ce que**
la largeur de la section d'entrée d'écoulement radiale (3a) qui est réglable par déplacement axial de la bague d'écoulement (7) est délimitable à un minimum et/ou à un maximum.

4. Turbocompresseur selon la revendication 2 ou 3,
**caractérisé en ce que**
des butées fixes sur le boîtier sont prévues pour délimiter le déplacement axial.

5. Turbocompresseur selon l'une quelconque des revendications 2 à 4,
**caractérisé en ce que** des douilles d'écartement (14) qui définissent la largeur axiale minimale de la section d'entrée d'écoulement radiale (3a) sont prévues dans la section d'entrée d'écoulement radiale (3a).

6. Turbocompresseur selon l'une quelconque des revendications 1 à 5,
**caractérisé en ce que**
la section d'entrée d'écoulement semi axiale (3b) est formée par une bague extérieure (9) et par une bague intérieure (10) de la bague d'écoulement (7).

7. Turbocompresseur selon la revendication 6,
**caractérisé en ce que**
sur la face interne radiale de la bague intérieure (10) on a prévu une bague d'étanchéité (11) pour assurer l'étanchéité par rapport à un élément fixe sur le boîtier.

8. Turbocompresseur selon l'une quelconque des revendications 1 à 7,
**caractérisé en ce**
**qu'**une grille de guidage (5) avec des pales de guidage (6) réglables, qui sur au moins une face frontale axiale comportent des plaques de recouvrement est disposée dans la section d'entrée d'écoulement radiale (3a).

9. Turbocompresseur selon l'une quelconque des revendications 1 à 8
**caractérisé en ce que** les pales de guidage (6) dans la grille de guidage radiale (5) sont logées dans le boîtier du compresseur à suralimentation, par l'intermédiaire d'un arbre axial (15a).

10. Turbocompresseur selon l'une quelconque des revendications 1 à 9,
**caractérisé en ce que**
les pales de guidage (6) dans la grille de guidage radiale (5) sont logées dans la bague d'écoulement (7) par l'intermédiaire d'un arbre axial (15b).

11. Turbocompresseur selon l'une quelconque des revendications 1 à 10,
**caractérisé en ce**
**qu'**une grille de guidage (4) avec des pales fixes est disposée dans la section d'entrée d'écoulement semi axiale (3a).

12. Turbocompresseur selon la revendication 2,
**caractérisé en ce que**
la bague d'écoulement (7) est soumise du fait du soufflage semi axial à une force de compression résultante en direction de l'axe de la roue de turbine, notamment en direction d'une grille de guidage radiale (5) dans la section d'entrée d'écoulement radiale (3a).
